# EUROPEAN PATENT APPLICATION

(11) **EP 1 407 929 A2**
(43) Date of publication of application: **14.04.2004**
(21) Application number: 02027047.6
(22) Date of filing: 03.12.2002
(51) Int. Cl.: B60Q 1/14

(54) **Automatic device for turning on and off vehicle low beams and for providing related additional services**

(30) Priority: 09.10.2002 IT TO20020870
(71) Applicant: Parisch, Carlo, 10078 Venaria (IT)
(72) Inventor: Parisch, Carlo, 10078 Venaria (IT)
(74) Representative: Garavelli, Paolo

(57) **Abstract**

An automatic device (1) is disclosed for turning on and off vehicle low beams upon entering or exiting superhighway stations, comprising: an electronic equipment (3) that receives a radiofrequency signal from an emitter / receiver (5) or an electric signal from a receiver (7) installed on a vehicle and energised by fixed equipment in superhighway stations; and an electronic device (9) that is actuated to supply the section related to low beams and that turns off the low beams upon exiting the superhighway station only when sufficient light conditions exist, since the device (9) is equipped with a sensor (11) that measures the amount of light and therefore allows turning off/keeping turned on the lights depending on environmental conditions.

## Description

The present invention refers to an automatic device for turning on and off low beams of vehicles entering and exiting superhighway stations and for providing further additional services related to such device. For example, one of these services could be a second user connected to a control card of the tachometer from which a signal could be taken adapted to point out an excessive speed.

With the entry in force of the compulsory turning on of low beams for all cars and trucks on superhighways and two-lane highways in Italy, the need of an automatic device is more and more felt which performs such turning on function even when the driver is careless and/or forgets or neglects it, also taking into account that many cars and trucks are nowadays equipped with automatic systems operating when crossing superhighway stations connected to fixed reception systems (for example the so-called "Telepass" system).

No devices of this type are currently marketed or present in the art.

Object of the present invention is solving the above prior-art problems, by providing a device that allows automatically turning on low beams, running lights and dashboard lights for any type of vehicle, upon its entry in a superhighway, highway or road in general where such turning on operation is compulsory by law.

Another object of the present invention is providing a device of the above type that is equipped with additional services connected and operating according to the functionalities for which such device has been realised.

The above and other objects and advantages of the invention, as will appear from the following description, are obtained by an automatic device as claimed in Claim 1. Preferred embodiments and non-trivial variations of the present invention are claimed in the dependent Claims.

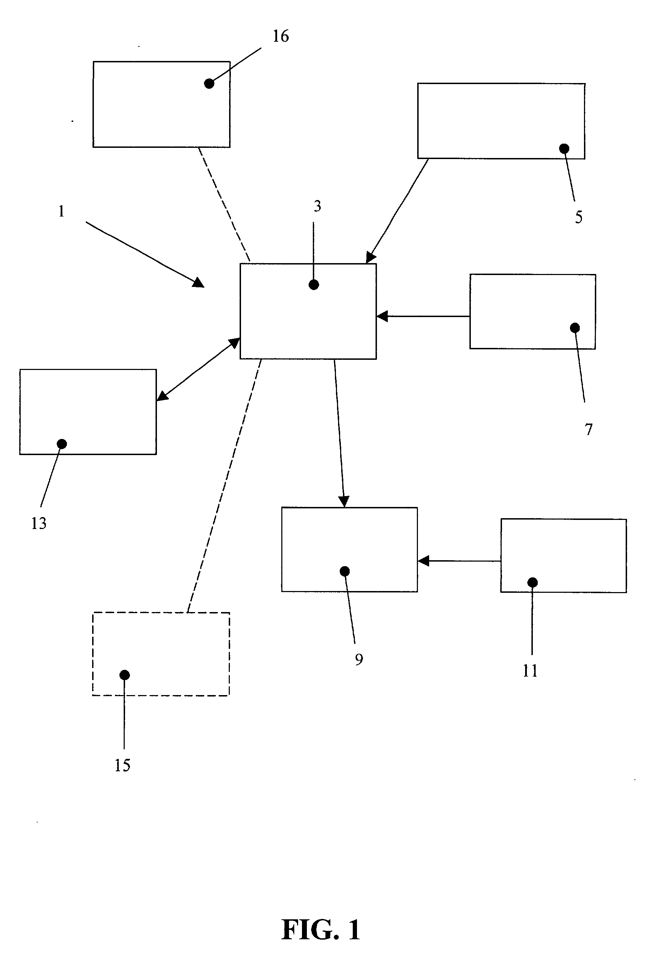

The present invention will be better described by some preferred embodiments thereof, given as a nonlimiting example, with reference to the enclosed drawings, in which Figure 1 is a block diagram that shows the main components of an embodiment of the automatic device according to the present invention.

With reference to the Figures, a preferred embodiment of the automatic device of the present invention is shown and described. It will be immediately obvious to the skilled people in the art that numerous variations and modifications (for example related to shape, sizes, various colours and parts with equivalent functionalities) could be made to the described device without departing from the scope of the invention as claimed in the enclosed Claims.

The automatic device 1 of the present invention consists in an electronic equipment 3 that receives a radiofrequency signal directly from an emitter /receiver 5, for example of the Telepass type, where it exists, or from another supplementary emitter (not shown) for cars and trucks that are not equipped with the equipment 3 adapted to receive signals of the Telepass type.

Alternatively, the automatic device 1 of the invention receives an electric signal directly from a receiver 7 (for example of the Telepass type) installed on the vehicle when the receiver 7 is energised by the fixed emitter equipment (not shown) existing in superhighway stations.

The automatic device 1 for turning on processes the received signal and, taking into account the physical status in which vehicle controls are, operates an electric device 9 (relay - static actuator) that closes the circuit by supplying the section related to low beams, running lights and control panel for dashboard instruments, independently from the general light switch position and the drive switch lever position.

The same function that has been previously described can be obtained by directly operating on the vehicle electronic unit (where it exists), being an integral part thereof or a following modification thereof.

The same electric device 9 with the same modes takes care of turning on the low beams, running lights and dashboard lights upon exiting the superhighway station only when enough light conditions occur, being it equipped with a sensor 11 that is able to measure the amount of light and therefore to turn off/keep turned on the lights depending on environmental conditions.

The automatic device 1 of the invention is further equipped with storage means 13 that allow remaining in the conditions in which the device 1 had been auto-programmed, even upon turning off the vehicle engine and removing the startup key, without obviously receiving the closure signal, including interruptions due to any reason (also upon a battery disconnection).

The automatic device 1 of the invention can further be equipped with means 15 that recognise the positioning of manual control switches (inserted key - inserted lever - type of turned-on lights - inserted automatisms, etc.), and that consequently perform the necessary manoeuvres to keep the vehicle under safety conditions.

Moreover, the automatic device 1 can be equipped with a delaying device 16 with defined times, both in case of inserted key, and in case of disconnected key for lights turning off interventions after having switched off the engine and stopped the vehicle.

The device can be provided with a simplified arrangement (not shown), that provides for a user intervention only upon turning off in the following modes:
- same operation and safeties upon entering a superhighway station and during running and stops
- different operation when exiting the superhighway station, since, upon receiving the Telepass signal or a signal from another emitter, the device 1 does not automatically turn the low beams off, but issues an acoustic or luminous intermittent signal for sixty seconds warning the user that takes care of manually operating on the switch to turn off the lights with modes complying with application instructions.

A third, even more simplified arrangement (not shown) is provided that activates the device 1 when passing the superhighway station both upon entry and upon exit, such station being connected with fixed emitting/receiving systems (of the Telepass type), as previously described, but with an acoustic or luminous warning to the user, such warning being adapted to inform the user to manually turn on or off the low beams (and consequently the running and dashboard lights).

Such arrangement is stably connected without any type of fixed connection and/or modification to the Telepass receiving apparatus or the like.

Such arrangement can also use, as acoustic and/or luminous warning device, accessories that are normally used in a vehicle, such as car radio set, satellite or mobile telephones, etc.

## Claims

1. Automatic device (1) for turning on and off vehicle low beams upon entering or exiting superhighway stations, **characterised in that** it comprises:
- an electronic equipment (3) that receives a radiofrequency signal from an emitter / receiver (5), and
- an electronic device (9) that, depending on the signal received from said electronic equipment (3) and taking into account the physical status in which vehicle controls are, is actuated to close a circuit that supplies the section related to low beams independently from the general lights switch position and the drive switch lever position, said electronic device (9) turning off the low beams upon exiting the superhighway station only when sufficient light conditions exist, said electronic device (9) being equipped with a sensor (11) that is able to measure the amount of light and therefore to turn off/keep turned on the lights depending on environmental conditions.

2. Automatic device (1) according to Claim 1, **characterised in that** said electronic equipment (3) receives an electric signal directly from a receiver (7) installed on a vehicle when the receiver (7) is energised by a fixed equipment existing in superhighway stations.

3. Automatic device (1) according to Claim 1 or 2, **characterised in that** said emitter / receiver (5) or said receiver (7) is of the Telepass type.

4. Automatic device (1) according to any one of the previous Claims, **characterised in that** said electronic device (9) is equipped with a relay or a static actuator.

5. Automatic device (1) according to any one of the previous Claims, **characterised in that** it is further equipped with storage means (13) that allow remaining in the conditions in which the device (1) had been auto-programmed, even under vehicle switching-on conditions and under startup key removal conditions, without receiving the closure signal, including any type of interruptions, such as battery disconnection.

6. Automatic device (1) according to any one of the previous Claims, **characterised in that** it is further equipped with means (15) for recognising the positioning of manual control switches (inserted key
- inserted lever - type of turned-on lights - inserted automatisms), and for consequently performing the necessary manoeuvres for keeping the vehicle under safety conditions.

7. Automatic device (1) according to any one of the previous Claims, **characterised in that** it is further equipped with a delaying device (16) with defined times, both in case of inserted key, and in case of disconnected key for lights turning-off interventions after having switched off the engine and having stopped the vehicle.

8. Automatic device (1) according to any one of the previous Claims, **characterised in that** the device (1) is embedded into and is an integral part of the vehicle electronic unit.

9. Automatic device (1) according to any one of the previous Claims, **characterised in that** the device (1) is adapted to automatically turn on the low beams upon entering a superhighway station and is adapted to warn the user to turn off the low beams when exiting the superhighway station, upon receiving the Telepass signal or a signal from another emitter.

10. Automatic device (1) according to Claim 9, **characterised in that** the device (1) is adapted to issue an acoustic or luminous intermittent signal warning the user that he has to take care of manually operating on the switch to turn off the lights.

11. Automatic device (1) according to any one of the previous Claims, **characterised in that** the device (1) is adapted to warn the user to manually turn on or off the low beams when passing the superhighway station both upon entry and upon exit, such station being connected with fixed emitting/receiving systems.

12. Automatic device (1) according to Claim 11, **characterised in that** said warning is of the acoustic or luminous type.

13. Automatic device (1) according to any one of the previous Claims, **characterised in that** the device (1) is stably connected without any type of fixed connection and/or modification to the Telepass receiving apparatus or the like.

14. Automatic device (1) according to any one of Claims 9 to 13, **characterised in that** the device (1) uses, as acoustic and/or luminous warning device, accessories that are normally used in a vehicle, such as car radio set, satellite or mobile telephones.
